# EUROPÄISCHE PATENTANMELDUNG

(11) **EP 2 328 243 A1**
(43) Veröffentlichungstag der Anmeldung: **01.06.2011**
(21) Anmeldenummer: 09177261.6
(22) Anmeldetag: 26.11.2009
(51) Int. Cl.: H01S 3/11, G02B 17/00, H01S 3/07, H01S 3/081, H01S 3/0941

(54) **Spiegelanordnung zur Führung eines Laserstrahls in einem Lasersystem und Strahlführungsverfahren für einen Laserstrahl**

(71) Anmelder: High Q Technologies GmbH, 6832 Röthis (AT); Kopf, Daniel, Dr., 6832 Röthis (AT)
(72) Erfinder: Meier, Joachim, 6850 Dornbirn (AT); Wegner, Ulrike, 6845 Hohenems (AT); Lederer, Maximilian Josef, 6861 Alberschwende (AT)
(74) Vertreter: Harmann, Bernd-Günther

(57) **Zusammenfassung**

In einer Spiegelanordnung zur Führung eines Laserstrahls in einem Lasersystem mit mindestens einem ersten Endspiegel (1) und einem zweiten Endspiegel (2) definieren diese Endspiegel (1,2) einen Resonator mit optischen Resonatorachse (OA), wobei der Laserstrahl als Eingangslaserstrahl (ES) in den Resonator geführt und nach mehrfacher Reflexion an jeweils dem ersten und dem zweiten Endspiegel (1,2) als Ausgangslaserstrahl (AS) wieder aus dem Resonator geführt wird. Dabei legt die Abfolge der Reflexionen an dem ersten und dem zweiten Endspiegel (1,2) eine gegenüber der Resonatorachse (OA) als Drehachse definierte Drehrichtung zwischen dem ersten und zweiten Endspiegel im Resonator fest, wodurch ein erster Strahlgang definiert ist und der Laserstrahl mit einer gegenüber der Resonatorachse (OA) als Drehachse definierten Drehrichtung zwischen dem ersten und zweiten Endspiegel im Resonator umläuft. Der Resonator ist so ausgebildet, dass die Drehrichtung in einem Umkehrpunkt umgekehrt wird und der Laserstrahl im Resonator zumindest teilweise mit zum ersten Strahlgang gegenläufiger Drehrichtung durchläuft, wodurch ein zweiter Strahlgang definiert ist.

## Beschreibung

Die Erfindung betrifft eine Spiegelanordnung zur Führung eines Laserstrahls in einem Lasersystem nach dem Oberbegriff von Anspruch 1, ein Lasersystem mit einer solchen Laseranordnung und ein Strahlführungsverfahren für einen Laserstrahl nach dem Oberbegriff des Anspruchs 15.

In Lasersystemen zur Erzeugung von ultrakurzen Pulsen, d.h. Pulsen mit einer Pulsdauer im Femto- oder Pikosekundenbereich, sind oftmals grosse Abstände zwischen den Endspiegeln erforderlich, z.B. wenn niedrige Pulswiederholraten erforderlich sind, d.h. typischerweise weniger als ∼30 MHz. Resonatoren solcher Lasersysteme sollen neben der grossen Länge (> 4 m) eine kompakte Bauform, hohe Unempfindlichkeit gegen unbeabsichtigte Verstellung der optischen Elemente, z.B. durch Temperaturänderungen, mechanische Vibrationen etc., sowie einfache Realisierbarkeit aufweisen.

Ein Beispiel für solche Lasersysteme sind modengekoppelte Laseranordnungen nach dem Prinzip der Pulsauskopplung bzw. Cavity Dumping, z.B. mit Nd:YVO₄ als Lasermaterial und durchschnittlichen Leistungen zwischen 7,8 W bzw. Pulsenergien von 15,6 µJ bei Repetitionsraten von 500 kHz und 10 W sowie 10 µJ bei 1 MHz. Solche Lasersysteme werden beispielsweise zur Materialbearbeitung eingesetzt.

Im Stand der Technik werden verschiedene Methoden beschrieben, bei denen zwei oder mehr Spiegel so angeordnet werden, dass ein optischer Strahl bzw. Laserstrahl mehrfach zwischen diesen Spiegel reflektiert und dadurch die totale Pfadlänge auf geringer Grundfläche erhöht werden kann.

Diese Anordnungen werden üblicherweise nach den Autoren der ersten Berichte benannt, z.B. die White-Zelle (J. U. White, J. Opt. Soc. Am. 32, 285 (1942)), die Hanst-Zelle (P. L. Hanst, Adv. Environ. Sci. Technol. 2, 91 (1971)) oder die vermutlich meistverwendete Zelle, die Herriott-Zelle (D. R. Herriott and H. J. Schulte, Appl. Opt. 4, 883 (1965) sowie US 3,437,954). Im folgenden wird beispielhaft die Herriott-Zelle detaillierter beschrieben.

Eine solche Herriott-Zelle mit Mehrfachdurchgang bzw. in Multipass-Anordnung besteht in der einfachsten Anordnung aus zwei Spiegeln als die Zelle definierenden Endspiegeln, mindestens einer davon mit konkaver Oberfläche, die in einem bestimmten Abstand zueinander angeordnet sind. Die Spiegelanordnung bildet selbst einen optischen Resonator, in dem ein Strahl mehrfach reflektiert wird und sich nach einer bestimmten Zahl von Durchgängen selbst wiederholt. An den Endspiegeln bildet sich dabei ein umlaufendes, auf einer Ellipse oder einem Kreis liegendes Muster von Reflexionspunkten. Typischerweise wird der Strahl nach einmaligem Durchlauf der Zelle, d.h. vor der bevorstehenden identischen Wiederholung des Strahlgangs, wieder aus der Spiegelanordnung ausgekoppelt. Zur Auskopplung bei Verwendung in optischen Resonatoren kann dieser geschlossene Strahlengang in der Zelle entweder durch separate Spiegel oder durch Bohrungen an einem der Endspiegel aufgebrochen werden (siehe z.B. Kowalevicz et al., "Design principles of q-preserving multipass-cavity femtosecond lasers" J. Opt. Soc. Am. B, Vol. 23, No. 4, April 2006).

Eine andere strahlfaltende Spiegelanordnung ist beispielsweise aus der EP 1 588 461 bekannt, wobei zwei reflektierende planaren Flächen so angeordnet sind, dass der Laserstrahl an jeder der reflektierenden Flächen mehrfach reflektiert wird und der Strahlgang einen in die Faltvorrichtung einfallenden Strahl und einen aus der Faltvorrichtung ausfallenden Strahl aufweist, wobei die reflektierenden Flächen gegeneinander mit einem Öffnungswinkel grösser 0° orientiert sind. Eine solche lineare Anordnung führt somit zu einem zick-zackförmigen Verlauf des Strahlgangs, wobei die Reflexionspunkte auf den beiden spiegelnden Flächen in einer Linien liegen und einen sich ändernden Abstand aufweisen. In dieser Anordnung wird somit der zur Strahlfaltung zur Verfügung stehende Raum nur in einer Ebene, d.h. zweidimensional, genutzt.

In bisherigen Spiegelanordnungen ist somit die Zahl der Reflexionen auf einen Durchlauf begrenzt oder es erfolgt eine Strahlfaltung nur in einer Ebene.

Eine Aufgabe der vorliegenden Erfindung besteht in der Bereitstellung eines verbesserten Lasersystems, insbesondere eines diodengepumpten, modengekoppelten Lasersystems.

Eine weitere Aufgabe besteht in der Bereitstellung eines solchen Lasersystems, das eine erhöhte Kompaktheit und/oder grössere Robustheit aufweist.

Diese Aufgaben werden durch die Gegenstände der Ansprüche 1 bzw. 15 oder der abhängigen Ansprüche gelöst bzw. die Lösungen weitergebildet.

Die Erfindung betrifft eine Spiegelanordnung zur Führung eines Laserstrahls in einem Lasersystem bzw. ein entsprechendes Strahlführungsverfahren für einen Laserstrahl. Dabei basiert die Spiegelanordnung auf wenigstens zwei Spiegeln, die als Endspiegel einen Resonator zur gefalteten Strahlführung definieren und zwischen denen der Strahlgang mehrfach hin und her geführt wird, wobei jeweils an den Endspiegeln Reflexionen auftreten. Dabei kann der Strahlgang im Resonator durch die Verwendung von einem oder mehreren weiteren Spiegel zusätzlich gefaltet werden, so dass die Kompaktheit der Anordnung bzw. eines dies nutzenden Gesamtaufbaus weiter erhöht werden kann.

In diese Spiegelanordnung wird ein Laserstrahl geführt bzw. eingekoppelt, so dass dieser einen ersten Strahlgang als Teil des Gesamtstrahlgangs im Resonator durchläuft. Während dieses ersten Durchgangs verläuft der Strahlgang zwischen den Endspiegeln, wobei die dort auftretenden Reflexionspunkte auf einer kreisförmigen Linie liegen und mit einer Drehrichtung, z.B. im Uhrzeigersinn, durchlaufen werden. Nach einem Durchlauf, d.h. nach Erreichen des Punktes, an dem ein erneuter Durchgang durch den schon durchlaufen Pfad bzw. Strahlgang erfolgen würde, erfolgt eine Rückreflexion des Strahls unter einer Winkeländerung, so dass ein identischer oder ähnlicher zweiter Strahlgang durchlaufen wird, der jedoch mit seinen Reflexionspunkten auf den Endspiegeln gegenüber dem ersten Strahlgang versetzt bzw. verdreht ist. Erfolgen beispielsweise im ersten Strahlgang jeweils fünf Reflexionen an den Endspiegeln, so wird der zweite Strahlgang durch Rückreflexion unter Winkeländerung vorzugsweise so ausgebildet, dass ebenfalls jeweils fünf Reflexionspunkte auf den Endspiegeln auftreten, wobei diese in den Zwischenräumen des Reflexionspunktemusters des ersten Strahlgangs zu liegen können. Bei der Rückführung des Strahls im bzw. durch den Resonator wird dabei die Drehrichtung umgekehrt, so dass beide Strahlgänge mit gegenläufiger Drehrichtung ineinander verschränkt werden. Dem liegt eine wichtige Erkenntnis zugrunde, die sich aus der Betrachtung des Strahlmusters auf den Endspiegeln ergibt. Es gibt ein Muster, bei dem die Strahlen im Uhrzeigersinn rotieren, sowie ein Muster mit Rotation im Gegenuhrzeigersinn, wobei beide Muster die ansonsten gleichen Eigenschaften haben. Es ist also prinzipiell möglich eine Spiegelanordnung mit zwei Endspiegeln bzw. eine Herriott-Zelle zweimal zu durchlaufen. Beide Durchläufe haben bis auf den Drehsinn die gleichen Eigenschaften. Eine Separierbarkeit der Strahlen ist durch die unterschiedlichen Winkel gegeben.

Neben dieser hinsichtlich der Reflexionen gleichartigen, jedoch versetzten Strahlführung für beide Strahlgänge ist es durch geeignete Wahl des Rückreflexionswinkels und/oder weiterer strahlbeeinflussender Elemente jedoch auch grundsätzlich möglich, für einen der beiden Strahlgänge eine grössere Zahl von Reflexionspunkten zu realisieren. So können im ersten Strahlgang vier Reflexionspunkten auf den beiden Endspiegeln auftreten, wohingegen der zurücklaufende Strahlgang mit der doppelten Zahl von Reflexionspunkten, d.h. in diesem Fall zehn Reflexionspunkten ausgebildet wird. Durch ein ganzzahliges Verhältnis der Reflexionspunkte zwischen den Strahlgängen können diese auch bei unterschiedlichen Zahlen von Reflexionspunkten noch ineinander verschränkt werden.

Durch weitere Spiegelkomponenten können die Ein- oder Auskopplung des Laserstrahls gestaltet werden.

Ausführungsbeispiele für eine erfindungsgemässes Spiegelanordnung bzw. ein entsprechendes Verfahren und ein die Spiegelanordnung verwendendes Lasersystem werden nachfolgend schematisch dargestellt und rein beispielhaft näher beschrieben. Im einzelnen zeigen
- Fig.1-8: die Darstellung eines ersten Ausführungsbeispiels der erfindungsgemässen Spiegelanordnung bzw. des erfindungsgemässen Strahlführungsverfahren für einen Laserstrahl;
- Fig.9-10: die Darstellung eines zweiten Ausführungsbeispiels der erfindungsgemässen Spiegelanordnung mit einem Faltspiegel und
- Fig.11: die Darstellung eines Lasersystems mit dem zweiten Ausführungsbeispiel der erfindungsgemässen Spiegelanordnung.

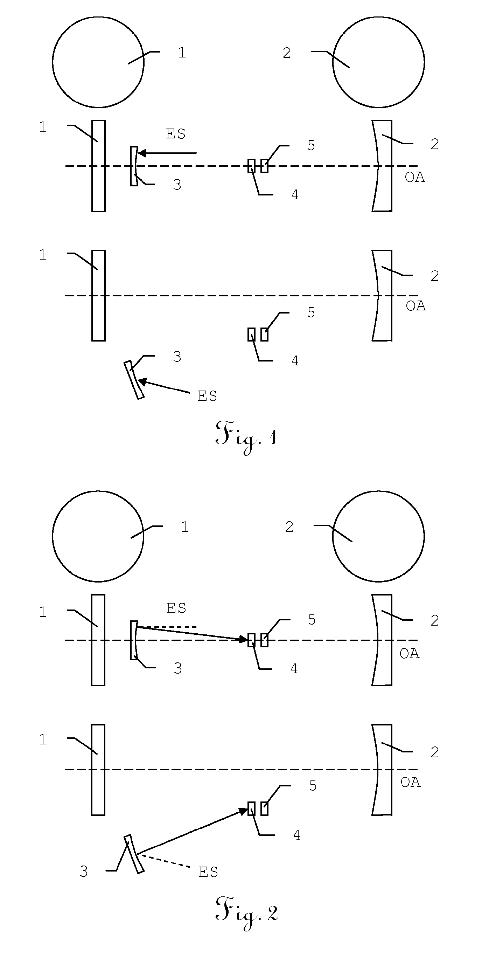

Fig.1-8 zeigt die Darstellung eines ersten Ausführungsbeispiels der erfindungsgemässen Spiegelanordnung bzw. des erfindungsgemässen Strahlführungsverfahren für einen Laserstrahl, wobei Strahlführung in verschiedenen Figuren erläutert wird.

In Fig.1 ist die Situation beim Einkoppeln eines Laserstrahls als Eingangslaserstrahl ES in den Resonator dargestellt, wobei dieser als Herriott-Zelle mindestens aus einem ersten Endspiegel 1 und einem zweiten Endspiegel 2 mit konkaver Oberfläche gebildet wird. Die in diesem Ausführungsbeispiel dargestellte Anordnung der beiden Endspiegel 1 und 2 ist rein exemplarisch gewählt. Insbesondere können beide Spiegel in ihrer Position grundsätzlich auch ausgetauscht werden. Zwischen den beiden Endspiegeln verläuft eine diese verbindende optische Resonatorachse OA, wobei diese in diesem Beispiel als eine Gerade dargestellt wird. In gefalteten Anordnungen kann die optische Resonatorachse OA jedoch auch einen entsprechend gefalteten, d.h. gewinkelten Verlauf aufweisen. Dem Resonator ist einen Fokussierspiegel 3 für den Eingangslaserstrahl ES und den Ausgangslaserstrahl AS vorgeschaltet.

Wie in Fig.2 gezeigt wird, lenkt dieser Fokussierspiegel 3 den Laserstrahl auf einen Einkoppelspiegel 4 und somit in den eigentlichen Resonator, wobei die Achse des Fokussierspiegels 3 in einer Ebene mit der Resonatorachse OA liegt.

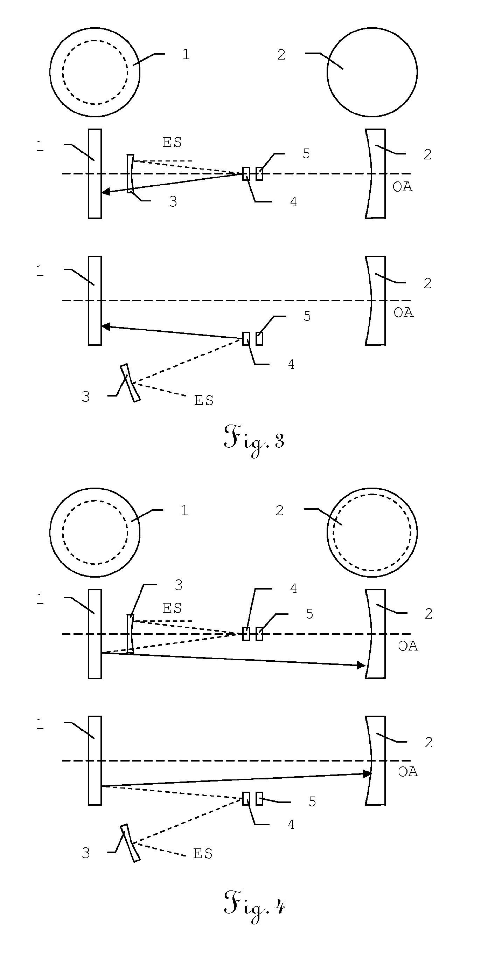

Nachfolgend wird, wie in Fig.3 dargestellt, der Laserstrahl vom Einkoppelspiegel 4 auf den ersten Endspiegel 1 geführt und danach, wie in Fig.4 gezeigt, auf den zweiten Endspiegel 2.

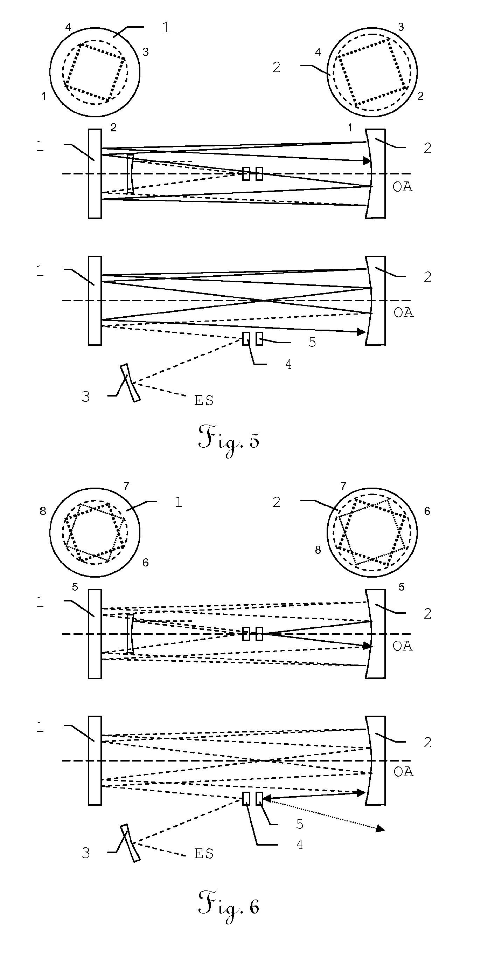

Wie in Fig.5 gezeigt erfolgt eine mehrfache Reflexion an jeweils dem ersten und dem zweiten Endspiegel 1,2, wobei in diesem Beispiel vier Reflexionspunkte auf den Endspiegeln 1,2 auftreten, welche ein Muster bilden, bei dem die Reflexionspunkte auf den Eckpunkten eines Quadrats liegen. Die Abfolge der Reflexionen an dem ersten und dem zweiten Endspiegel 1,2 definiert hierbei gegenüber der Resonatorachse OA als Drehachse eine Drehrichtung. Die Gesamtheit der Reflexionen und die dazwischen liegenden Strahlstrecken bilden dabei einen ersten Strahlgang mit definierter Drehrichtung aus, wobei dieser im oder entgegen dem Uhrzeigersinn verlaufen kann. Der Laserstrahl läuft somit mit einer definierten Drehrichtung zwischen dem ersten und zweiten Endspiegel im Resonator hin und her bzw. um.

Im Gegensatz zu einer regulären Herriott-Zelle bzw. Spiegelanordnungen des Stands der Technik ist der Resonator so ausgebildet, dass die Drehrichtung in einem Umkehrpunkt umgekehrt bzw. invertiert wird und der Laserstrahl im Resonator zumindest teilweise mit zum ersten Strahlgang gegenläufiger Drehrichtung durchläuft, wodurch ein zweiter Strahlgang definiert ist. Diese Situation ist in Fig.6 veranschaulicht, wobei in diesem Ausführungsbeispiel ein Invertierspiegel 5 zur Erzeugung des Umkehrpunktes verwendet wird, so dass dieser nach Durchlaufen des ersten Strahlgangs eine die Änderung von Drehrichtung bzw. Drehsinn auslösende Rückreflexion bewirkt. In herkömmlichen Herriott-Zellen wird der Laserstrahl an dieser Stelle aus der Anordnung ausgekoppelt, was in Fig.6 durch den gepunkteten Pfeil angedeutet ist.

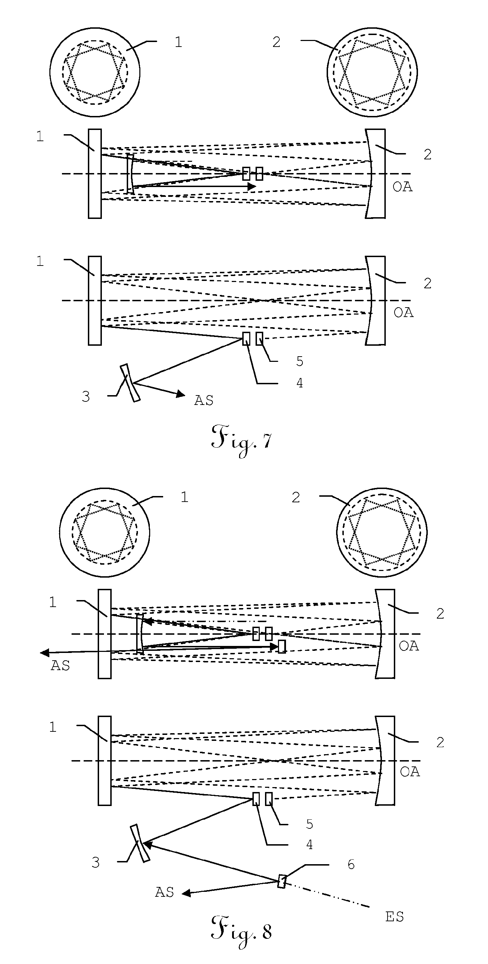

Wie in Fig.7 dargestellt ist, läuft der Laserstrahl nun in einem zweiten Strahlgang geänderter bzw. invertierter Drehrichtung erneut durch den Resonator, wobei erster und zweiter Strahlgang räumlich separiert sind. Damit bilden erster und zweiter Strahlgang einen geschlossenen und sich selbst wiederholenden gemeinsamen Strahlgang, der im Fall einer Rückreflexion zu Beginn des ersten Strahlgangs erneut durchlaufen würde. Auf den Endspiegeln 1,2 weisen der erste und der zweite Strahlgang dabei die gleiche Anzahl von Reflexionspunkten, insbesondere drei, vier oder fünf Reflexionspunkte, auf, die auf jedem der beiden Endspiegel 1,2 auf einer gemeinsamen Kreislinie liegen. Dabei wird durch die Reflexion am Invertierspiegel 5 die Lage der Reflexionspunkte von erstem und zweitem Strahlgang auf erstem und zweitem Endspiegel 1,2 gegeneinander versetzt bzw. um die Resonatorachse OA verdreht. In diesem Beispiel durchläuft der Laserstrahl die in Fig.5 und Fig.6 für beide Endspiegel 1,2 und Strahlgänge gezeigten Muster von Reflexionspunkten jeweils in der Reihenfolge der Reflexionspunkte 1-8. Durch die unterschiedlichen Richtungen der beiden Strahlgänge ergeben sich dabei gegenläufige Drehrichtungen.

Nach Durchlaufen des zweiten Strahlgangs wird der Laserstrahl schließlich als Ausgangslaserstrahl AS wieder aus dem Resonator geführt, was in Fig.7 gezeigt wird. Dabei ist der Fokussierspiegel 3 so angeordnet, dass dieser für den Ausgangslaserstrahl AS nach Durchlaufen des zweiten Strahlgangs einen zur Resonatorachse OA parallelen Strahlversatz bewirkt. Zudem kann der Resonator bzw. die Spiegelanordnung einen in Fig.8 gezeigten und den Eingangslaserstrahl ES und den Ausgangslaserstrahl AS trennenden Separationsspiegel 6 aufweisen.

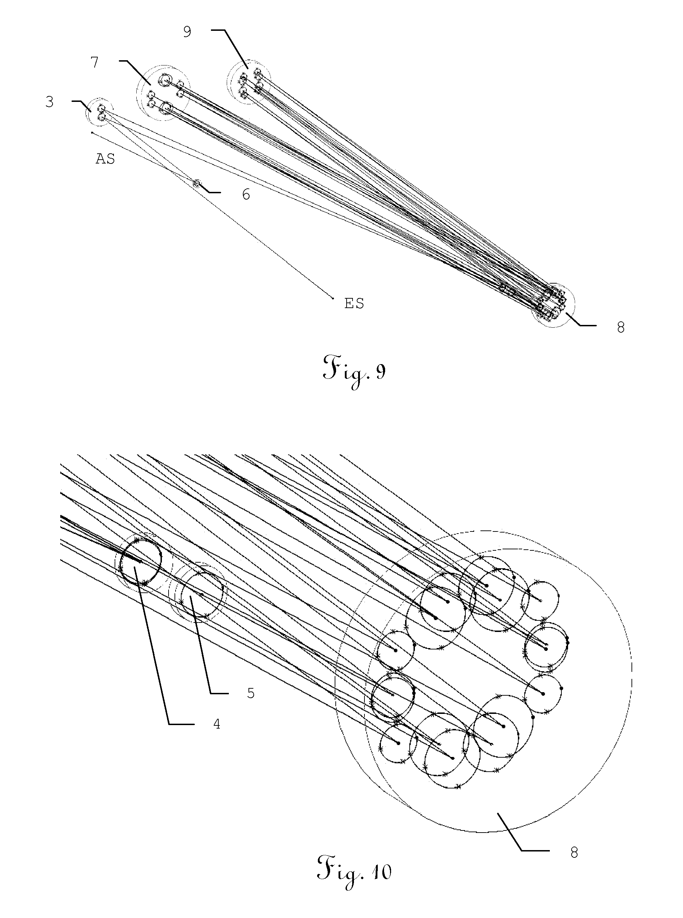

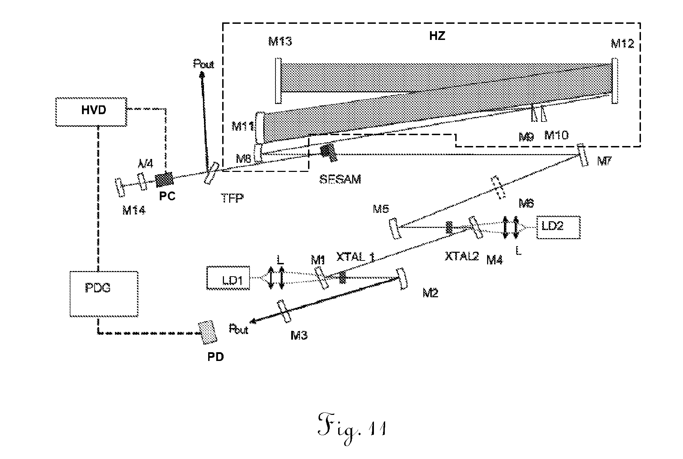

Die Fig.9-10 zeigen die Darstellung eines zweiten Ausführungsbeispiels der erfindungsgemässen Spiegelanordnung mit einem den ersten und zweiten Strahlgang gemeinsam faltenden Faltspiegel 8. In dieser für das in Fig.11 gezeigte Lasersystem realisierten Anordnung wird eine Herriott-Zelle bestehend aus drei Spiegeln 7,8,9 eingesetzt, um eine noch kompaktere Bauform zu erhalten. Der Einganslaserstrahl ES wird wiederum durch den Fokussierspiegel 3 als gekrümmtem Spiegel auf den Einkoppelspiegel 4 fokussiert und läuft dann im Uhrzeigersinn einmal durch den Resonator der Spiegelanordnung. Nach dem letzten Reflex am Faltspiegel 8 trifft der Strahl auf den Invertierspiegel 5 und wird nun im Gegenuhrzeigersinn nochmals durch den Resonator geschickt. Am Ende des zweiten Strahlgangs und damit der zweiten Rotation trifft der Laserstrahl erneut den Einkoppelspiegel 4, jedoch mit umgekehrtem Winkel. Dies führt nach Ausbreitung und Reflektion vom Fokussierspiegel 3 zu einer räumlichen Trennung von Eingangs- und Ausgangslaserstrahl ES,AS. Ein nachgeschalteter kleiner Separationsspiegel 6 wird genutzt, um den Ausgangslaserstrahl AS einfacher zugänglich zu machen.

Die Integration des zweiten Ausführungsbeispiels der erfindungsgemässen Spiegelanordnung in ein beispielhaftes Lasersystem zur Erzeugung oder Verstärkung von Femto- oder Pikosekundenpulsen zeigt Fig.11. Das Lasersystem ist als modengekoppelte Laseranordnungen nach dem Prinzip der Pulsauskopplung bzw. Cavity Dumping ausgebildet, mit Nd:YVO₄-Kristallen als Lasermedien XTAL1 und XTAL2. Dabei wird ein sättigbarer Absorberspiegel SESAM zur Erzeugung einer Modenkopplung, eine Pockels-Zelle PC mit Viertelwellenlängenplättchen λ/4 und einem Dünnschicht-Polarisator TFP als Pulsauskopplungskomponenten sowie Laserdiodenquellen LD1 und LD2 zum Pumpen der Lasermedien XTAL1 und XTAL2 verwendet. Als weitere Komponenten werden eine Photodiode PD, ein Pulsverzögerungsgenerator PDG und eine Hochspannungsversorgung HVD für die BBO-Pockels-Zelle PC sowie Spiegelelemente M1 bis M13 verwendet, wobei die in Fig.9 und 10 dargestellte Herriott-Zelle HZ durch die Spiegelelemente M8-M13 gebildet wird und das Spiegelelement M3 den Auskoppelspiegel des Lasersystems darstellt. Hingegen wird für die Herriott-Zelle als Ein- und Auskoppelspiegel die Spiegelelemente M9 und M10 verwendet, wobei das Spiegelelement M8 als Fokussierspiegel dient. Das als zweiter Endspiegel der Herriott-Zelle dienende Spiegelelement M11 weist einen Krümmungsradius von 1600 mm auf, wohingegen die als erster Endspiegel und Faltspiegel dienenden Spiegelelemente M12 und M13 flach ausgeführt sind. Die Spiegelelemente M1 und M4 sind dichroitische Spiegel, die in Verbindung mit den fasergekoppelten Laserdiodenquellen LD1 und LD2 als Pumpanordnungen dienen. Mit dieser Anordnung werden Leistungen zwischen 7,8 W bei Repetitionsraten von 500 kHz und 10 W bei 1 MHz erreicht.

Das dargestellte Lasersystem stellt jedoch nur ein Beispiel für den Einsatz einer erfindungsgemässen Spiegelanordnung dar, so dass deren Einsatz nicht hierauf beschränkt ist. Grundsätzlich kann die erfindungsgemässe Spiegelanordnung bzw. das erfindungsgemässe Strahlführungsverfahren für einen Laserstrahl in einer Vielzahl von Lasersystemen Verwendung finden, wenn dort ein kompakter und/oder robuster Resonator bzw. eine Integration grosser Strahlstrecken auf begrenztem Raum erfolgen soll.

## Patentansprüche

1. Spiegelanordnung zur Führung eines Laserstrahls in einem Lasersystem, insbesondere einem Lasersystem zur Erzeugung von Femto- oder Pikosekundenpulsen, mit mindestens
• einem ersten Endspiegel (1,7),
• einem zweiten Endspiegel (2,9) mit konkaver Oberfläche,
wobei
- der erste und der zweite Endspiegel (1,2,7,9) einen Resonator mit einer die Endspiegel (1,2,7,9) verbindenden optischen Resonatorachse (OA) bilden,
- der Laserstrahl als Eingangslaserstrahl (ES) in den Resonator geführt und nach mehrfacher Reflexion an jeweils dem ersten und dem zweiten Endspiegel (1,2,7,9) als Ausgangslaserstrahl (AS) wieder aus dem Resonator geführt wird, und
- die Abfolge der Reflexionen an dem ersten und dem zweiten Endspiegel (1,2,7,9) eine gegenüber der Resonatorachse (OA) als Drehachse definierte Drehrichtung zwischen dem ersten und zweiten Endspiegel im Resonator festlegt, wodurch ein erster Strahlgang definiert ist,
**dadurch gekennzeichnet, dass**
der Resonator so ausgebildet ist, dass die Drehrichtung in einem Umkehrpunkt umgekehrt wird und der Laserstrahl den Resonator zumindest teilweise mit zum ersten Strahlgang gegenläufiger Drehrichtung durchläuft, wodurch ein zweiter Strahlgang definiert ist.

2. Spiegelanordnung nach Anspruch 1,
**dadurch gekennzeichnet, dass**
der Resonator als Herriott-Zelle ausgebildet ist.

3. Spiegelanordnung nach Anspruch 1 oder 2,
**dadurch gekennzeichnet, dass**
erster und zweiter Strahlgang räumlich separiert sind.

4. Spiegelanordnung nach einem der vorangehenden Ansprüche,
**dadurch gekennzeichnet, dass**
erster und zweiter Strahlgang einen geschlossenen und sich selbst wiederholenden gemeinsamen Strahlgang bilden.

5. Spiegelanordnung nach einem der vorangehenden Ansprüche,
**gekennzeichnet durch**
einen dem ersten und/oder dem zweiten Endspiegel (1,2,7,9) vorgeschalteten Einkoppelspiegel (4).

6. Spiegelanordnung nach einem der vorangehenden Ansprüche,
**gekennzeichnet durch**
einen Invertierspiegel (5) zur Erzeugung des Umkehrpunktes, wobei nach Durchlaufen des ersten Strahlgangs eine drehrichtungsändernde Reflexion am Invertierspiegel erfolgt.

7. Spiegelanordnung nach einem der vorangehenden Ansprüche,
**dadurch gekennzeichnet, dass**
der erste und der zweite Strahlgang die gleiche Anzahl von Reflexionspunkten, insbesondere 3, 4 oder 5 Reflexionspunkte, jeweils auf dem ersten und dem zweiten Endspiegel (1, 2, 7, 9) aufweisen.

8. Spiegelanordnung nach Anspruch 6 und 7,
**dadurch gekennzeichnet, dass**
durch die Reflexion am Invertierspiegel (5) die Lage der Reflexionspunkte von erstem und zweitem Strahlgang auf erstem und zweitem Endspiegel (1,2,7,9) gegeneinander versetzt werden, insbesondere um die Resonatorachse (OA) verdreht werden.

9. Spiegelanordnung nach einem der vorangehenden Ansprüche,
**gekennzeichnet durch** einen Fokussierspiegel (3) für Eingangslaserstrahl (ES) und/oder Ausgangslaserstrahl (AS), insbesondere wobei die optische Achse des Fokussierspiegels (3) in einer Ebene mit der optischen Resonatorachse (OA) liegt.

10. Spiegelanordnung nach Anspruch 9,
**dadurch gekennzeichnet, dass**
der Fokussierspiegel (3) so angeordnet ist, dass dieser für den Ausgangslaserstrahl (AS) nach Durchlaufen des zweiten Strahlgangs einen zur Resonatorachse (OA) parallelen Strahlversatz bewirkt.

11. Spiegelanordnung nach einem der vorangehenden Ansprüche,
**dadurch gekennzeichnet, dass**
der Resonator wenigstens einen den ersten und zweiten Strahlgang gemeinsam faltenden Faltspiegel (8) aufweist.

12. Spiegelanordnung nach einem der vorangehenden Ansprüche,
**dadurch gekennzeichnet, dass**
der Resonator wenigstens einen den Eingangslaserstrahl (ES) und den Ausgangslaserstrahl (AS) trennenden Separationsspiegel (6) aufweist.

13. Lasersystem zur Erzeugung oder Verstärkung von Femto- oder Pikosekundenpulsen mit einer Spiegelanordnung nach einem der vorangehenden Ansprüche.

14. Lasersystem nach Anspruch 13,
**gekennzeichnet durch**
- einen sättigbaren Absorberspiegel zur Erzeugung einer Modenkopplung,
- einer Pulsauskopplungskomponente, insbesondere einem elektrooptischen Modulator,
- ein Lasermedium, insbesondere aus Nd:YVO₄,
- eine Laserdiodenquelle zum Pumpen des Lasermediums.

15. Strahlführungsverfahren für einen Laserstrahl in einem Lasersystem, insbesondere einem Lasersystem zur Erzeugung von Femto- oder Pikosekundenpulsen, mit mindestens
• einem ersten Endspiegel (1,7),
• einem zweiten Endspiegel (2,9) mit konkaver Oberfläche,
wobei
- der erste und der zweite Endspiegel (1,2,7,9) einen Resonator mit einer die Endspiegel (1,2,7,9) verbindenden optischen Resonatorachse (OA) bilden, mit einem
- Führen des Laserstrahls als Eingangslaserstrahls (ES) in den Resonator,
- Auskoppeln des Laserstrahls nach mehrfacher Reflexion jeweils an dem ersten und dem zweiten Endspiegel (1,2,7,9) als Ausgangslaserstrahl (AS) und
wobei die Abfolge der Reflexionen an dem ersten und dem zweiten Endspiegel (1,2,7,9) eine gegenüber der Resonatorachse (OA) als Drehachse definierte Drehrichtung zwischen dem ersten und zweiten Endspiegel im Resonator festlegt, wodurch ein erster Strahlgang definiert ist, so dass der Strahl mit einer gegenüber der Resonatorachse als Drehachse definierten Drehrichtung zwischen dem ersten und zweiten Endspiegel (1,2,7,9) im Resonator umläuft,
**dadurch gekennzeichnet, dass**
die Drehrichtung in einem Umkehrpunkt umgekehrt wird und der Laserstrahl den Resonator zumindest teilweise mit zum ersten Strahlgang gegenläufiger Drehrichtung durchläuft, wodurch ein zweiter Strahlgang definiert wird.
